# FASCICULE DE BREVET EUROPEEN

(11) **EP 2 802 484 B1**
(45) Date de publication et mention de la délivrance du brevet: **08.06.2016**
(21) Numéro de dépôt: 13701835.4
(22) Date de dépôt: 07.01.2013
(51) Int. Cl.: B60Q 1/04

(54) **PROJECTEUR AVANT POUR VEHICULE AUTOMOBILE**
VORDERER SCHEINWERFER FÜR EIN KRAFTFAHRZEUG
FRONT HEADLIGHT FOR A MOTOR VEHICLE

(30) Priorité: 09.01.2012 FR 1250215
(43) Date de publication de la demande: 19.11.2014
(73) Titulaire: Peugeot Citroën Automobiles SA, 78140 Vélizy Villacoublay (FR)
(72) Inventeur: DUVAL, Thomas, 49480 SAINT-SYLVAIN-D'ANJOU (FR); CARROUGET, Alain, F-28700 Levainville (FR)
(86) Numéro de dépôt international: PCT/FR2013/050028
(87) Numéro de publication internationale: WO 2013/104854

(56) Documents cités:
- EP-A1- 2 319 729
- FR-A1- 2 844 757
- FR-A1- 2 927 584
- US-A1- 2002 145 881

## Description

La présente invention est relative à un projecteur avant pour véhicule automobile.

Plus particulièrement, l'invention concerne un projecteur avant pour véhicule automobile, comportant un boîtier à ancrages supérieur et inférieur pour la fixation du projecteur à une structure de caisse du véhicule.

Un tel projecteur doit répondre à certaines contraintes relatives à montage en usine pour être assemblé à la structure de caisse du véhicule. Ces contraintes sont nombreuses car le bas du projecteur est à fixer dans un espace de la structure de caisse à accès restreint. En outre, le temps nécessaire au montage du projecteur dans de mauvaises conditions d'accès est un paramètre important dans les contraintes de montage et de fixation. La qualité du maintien du projecteur par ses fixations est aussi un paramètre important. Par ailleurs, le comportement du projecteur lors d'un choc de type frontal, par exemple lors d'un choc piéton est également un paramètre important.

Un exemple de ce genre de projecteur est connu du document FR2844757 qui propose des moyens frangibles pour la liaison du projecteur à la structure de caisse. Les solutions proposées dans ce document sont orientées pour répondre à la problématique de choc piéton mais les ancrages proposés sont relativement complexes car ils font intervenir un grand nombre de pièces ou ils nécessitent des moyens d'amortissement qui sont volumineux et coûteux. En outre, les ancrages sont mis en oeuvre en utilisant des assemblages par vissage à proximité des moyens frangibles. Dans le cas de la fixation sous le projecteur, les solutions à pluralité de pièces et nécessitant un vissage constituent une association qui n'est pas optimale. Un projecteur selon le préambule de la revendication 1 est connu du document US 2002/0145881.

La présente invention a notamment pour but de remédier aux inconvénients de l'art antérieur.

A cet effet, l'invention a pour objet un projecteur avant pour véhicule automobile, comportant un boîtier à ancrages supérieur et inférieur pour la fixation du projecteur à une structure de caisse du véhicule. Les ancrages comprennent un point d'ancrage inférieur qui est venu de matière avec le boîtier en étant conformé pour s'engager directement dans une partie rigide correspondante de la structure pour la fixation inférieure du projecteur à ladite structure et qui est frangible pour se rompre en cas de choc frontal sur le projecteur, le point d'ancrage inférieur étant conformé en fourchette à dent frangible et à espace inter-dentaire conformé pour recevoir une partie en forme de plaque prévue à la partie rigide de la structure du véhicule.

Dans divers modes de réalisation du projecteur selon l'invention, on peut éventuellement avoir recours en outre à l'une et/ou à l'autre des dispositions suivantes :
- la fourchette est à engagement par coincement de la partie rigide en forme de plaque de la structure ;
- le point d'ancrage inférieur est en dessous du boîtier ;
- le point d'ancrage inférieur comporte d'une part une zone de fixation frangible et d'autre part une zone de fixation de réparation pourvue d'un perçage de passage de vis susceptible d'être utilisée après rupture de la zone de fixation frangible, pour fixer le boîtier lors d'une réparation ;
- le point d'ancrage inférieur comporte au moins un flasque qui est venu de matière avec une paroi inférieure du boîtier et qui est frangible en ayant d'une part une fente d'engagement de la partie rigide de la structure et d'autre part une rainure d'affaiblissement dans le prolongement de cette fente ;
- le point d'ancrage inférieur comporte deux flasques frangibles qui sont reliés entre eux par une paroi intermédiaire située entre la paroi inférieure du boîtier et les fentes des flasques, cette paroi intermédiaire délimitant le perçage de la zone de fixation de réparation ;
- les ancrages comprennent deux points d'ancrages supérieurs par vissage.

Par ailleurs, l'invention a également pour objet un véhicule automobile comportant une structure de caisse et un projecteur comportant un boîtier à ancrages supérieur et inférieur fixés à la structure de caisse. Dans ce véhicule, le projecteur a son point d'ancrage inférieur qui est engagé dans une partie rigide de la structure.

Dans un mode de réalisation de ce véhicule, la structure de caisse comporte une partie rigide en forme de plaque qui est engagée directement dans le point d'ancrage inférieur pour un maintien du boîtier sensiblement dans la direction perpendiculaire à celle de la plaque, en complément de la fixation supérieure par les ancrages.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue schématique en perspective de trois quarts arrière d'un projecteur selon l'invention pour véhicule, comportant un point d'ancrage inférieur perfectionné pour sa fixation à une structure de caisse du véhicule ;
- la figure 2 est une vue schématique en perspective de trois quarts avant du projecteur de la figure 1 et de son point d'ancrage inférieur assemblé à une structure de véhicule ;
- la figure 3 est une vue schématique, agrandie et en perspective de trois quarts arrière du projecteur de la figure 1 et de son point d'ancrage inférieur assemblé à la structure du véhicule ;
- la figure 4 est une vue schématique de côté et agrandie du projecteur de la figure 1 et de son point d'ancrage inférieur assemblé à la structure du véhicule.

Sur les différentes figures, les mêmes références désignent des éléments identiques ou similaires.

Dans la description qui va suivre, la direction désignée comme longitudinale correspond à l'axe d'avancement d'un véhicule qui sert ici de référentiel.

En se reportant aux figures, la référence 10 désigne un projecteur avant de véhicule. Un tel projecteur 10 est intégré aux contours de pièces de carrosserie et d'un pare chocs avant du véhicule en étant fixé, sous ces pièces de carrosserie, à une structure de caisse supportant ces pièces.

Un tel projecteur 10 est aussi susceptible d'être soumis à des chocs frontaux, par exemple un choc du véhicule heurtant un piéton qui vient appuyer sur l'avant du projecteur. Dans ce cas, il est mieux que le projecteur tout comme les pièces environnantes de carrosserie soient autant que possible peu agressives pour limiter ou éviter des blessures du piéton.

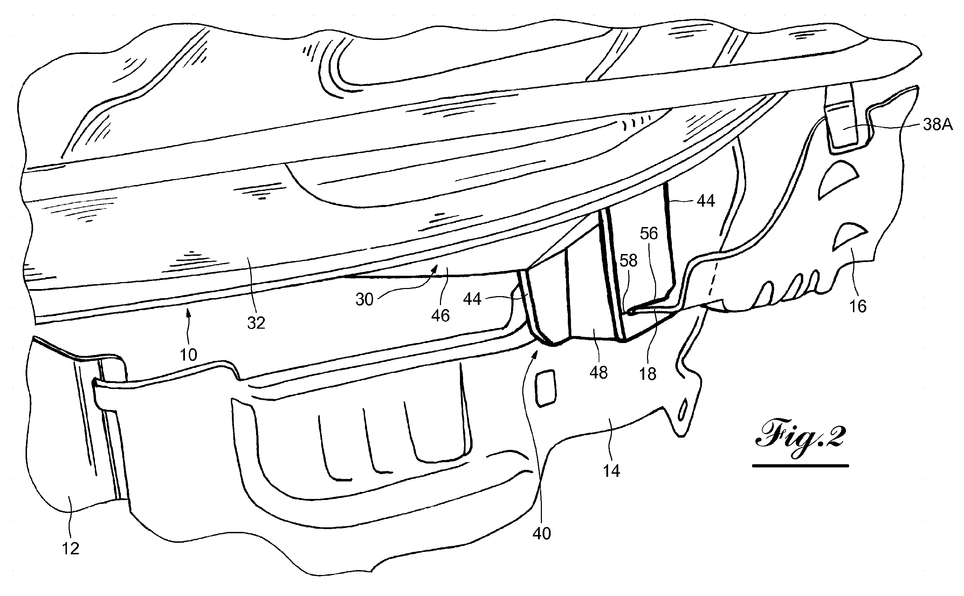

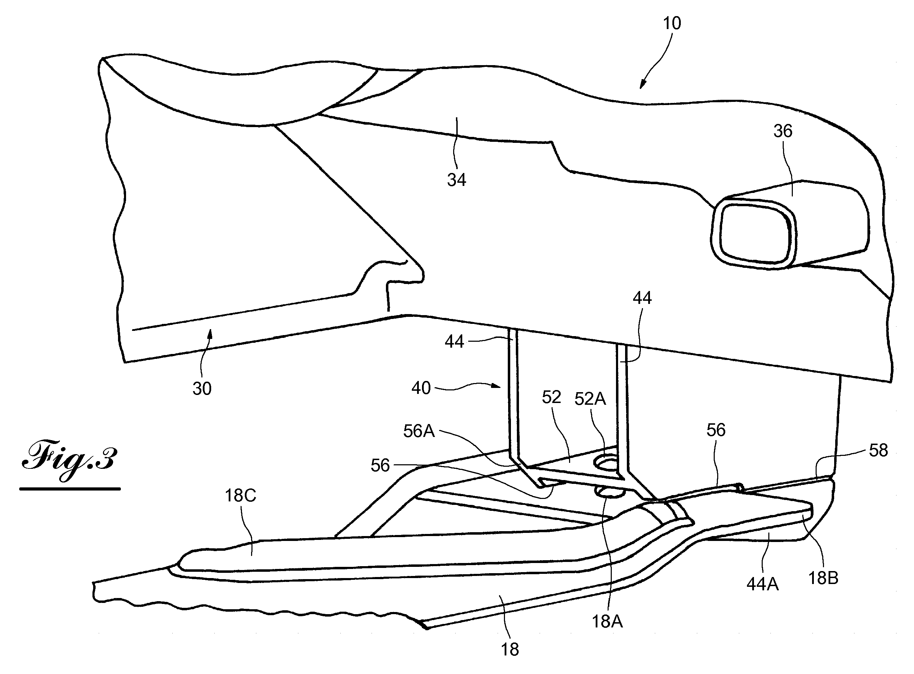

La structure de caisse comporte une tôle de traverse avant 12 et un panneau de doublure avant 14 prolongeant une doublure de passage de roue 16. La doublure de passage de roue 16 comporte une partie en forme de plaque rigide 18 s'étendant horizontalement en direction de l'avant, en étant à coté du panneau de doublure avant 14 (figure 2 et figure 3). La plaque rigide 18 comporte un orifice 18A de passage de vis, à son extrémité avant qui est plane 18B. Elle présente aussi une nervure arquée 18C pour renforcer sa rigidité.

Le projecteur 10 comporte un boîtier 30 déterminant l'arrière du projecteur et supportant la glace 32 (figure 2) à travers laquelle est diffusé vers l'avant l'éclairage du projecteur. Le boîtier 30 comporte classiquement des cages 34 de logement de lampe et de réflecteur, ainsi que des douilles 36 de logement de connecteurs ou autre organes électriques.

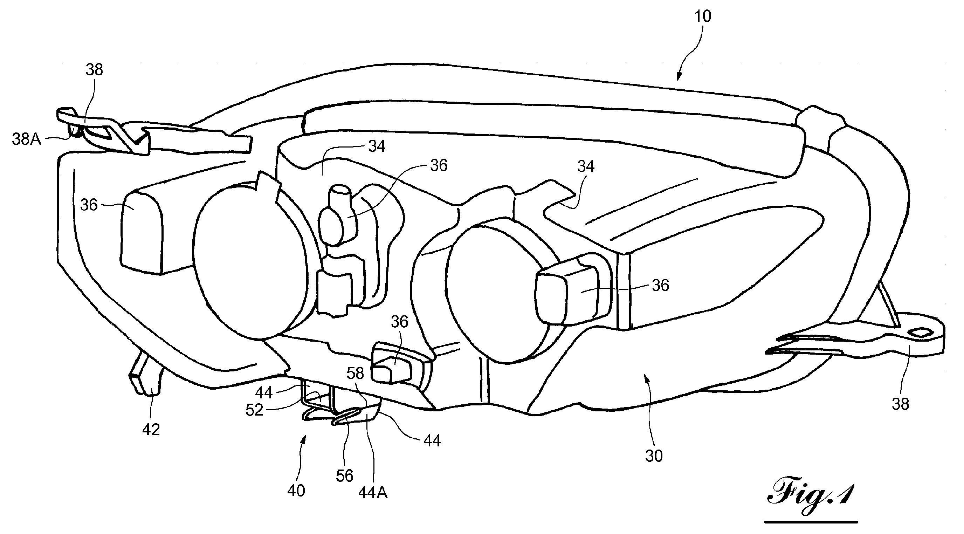

Le boîtier 30 comporte des ancrages pour la fixation du projecteur 10 à la structure de caisse du véhicule. Dans l'exemple considéré, comme représenté à la figure 1, le boîtier 30 comporte deux points d'ancrage supérieurs 38 et un point d'ancrage inférieur 40 qui est situé sous le boîtier. En complément des ancrages, le boîtier comporte un centreur 42, à proximité du point d'ancrage inférieur 40.

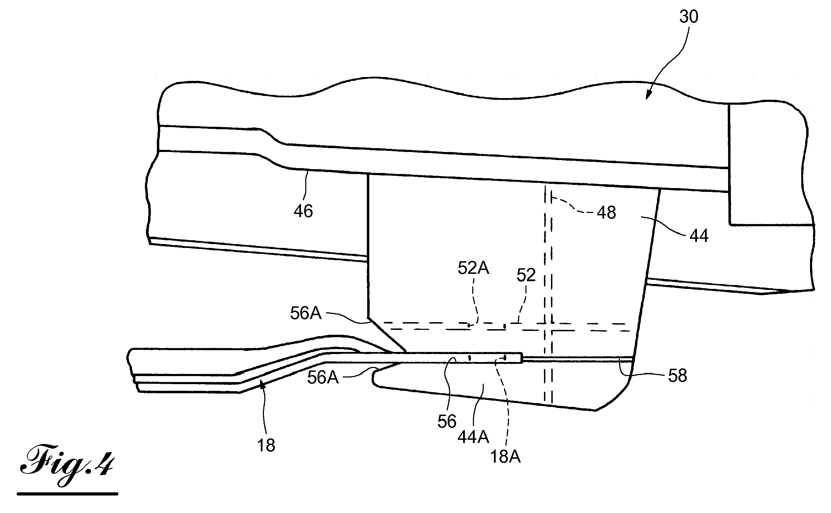

Dans le mode de réalisation représenté, le point d'ancrage inférieur 40 comporte un corps venu de matière avec reste du boîtier, par moulage d'un polymère approprié. Ce corps comprend deux flasques verticaux 44 qui s'étendent longitudinalement en étant raccordés à leurs extrémités supérieures à une paroi inférieure 46 du boîtier 30 (figure 4). Le corps comprend une paroi verticale avant 48 qui relie transversalement l'avant des flasques supérieurs 44. En outre, une paroi intermédiaire horizontale 52 relie le bas desdits flasques (figure 2). Cette paroi intermédiaire 52 délimite un perçage 52A de passages de vis.

Le point d'ancrage inférieur 40 comporte à chacun de ses flasques 44 une fente 56 découpant sensiblement la moitié arrière du flasque 44 correspondant. Chaque fente 56 présente une entrée arrière à embouchure évasée en présentant des pans biseautés 56A dans le flasque correspondant. Dans le prolongement de chaque fente 56, chaque flasque 44 présente une rainure d'affaiblissement 58 qui est disposée horizontalement en dessous de la paroi intermédiaire horizontale 52. Les fentes 56 permettent au point d'ancrage inférieur 40 d'avoir ses flasques 44 qui sont conformés pour déterminer chacun une fourchette à dent inférieure 44A située sous la fente correspondante et sous la rainure d'affaiblissement 58 correspondante.

Au fond de chacune des fentes 56 déterminant un espace inter-dentaire, le point d'ancrage inférieur 40 est affaibli, du fait que les rainures d'affaiblissement 58 réduisent localement l'épaisseur des flasques 44. Ainsi, en cas de sollicitations mécaniques, les dents inférieures 44A sont susceptibles de se rompre et de se séparer du reste du flasque correspondant.

Le projecteur avant 10 est assemblé à la structure de caisse du véhicule d'une part en plaçant le centreur 42 dans une partie correspondante de la tôle de traverse avant 12 et d'autre part par approche des points d'ancrages supérieurs relativement à des zones d'ancrage aménagées par exemple sur la tôle de traverse avant 12 ou sur la doublure de passage de roue 16. Par exemples, le point d'ancrage supérieur 38 représenté à gauche à la figure 1 présente une languette 38A qui est visible à droite et en haut de la figure 2 en étant logée dans une encoche correspondante de ladite doublure de passage de roue. Le point d'ancrage inférieur 40 est alors en regard de la plaque rigide 18 située à l'avant de la doublure de passage de roue.

Ensuite, le boîtier 30 est coulissé longitudinalement d'avant en arrière en engageant mutuellement l'extrémité plane avant 18B de la plaque rigide 18 avec les fentes 56 du point d'ancrage inférieur 40. Il y a un engagement par coincement de ladite plaque 18 entre les dents de fourchette déterminées dans les flasques 44 par les fentes 56. Cet engagement permet un blocage de positionnement vertical du boîtier 30 relativement à la structure. Le coincement et le maintien vertical résultent d'un fond de fente 56 de hauteur appropriée relativement à l'épaisseur de la plaque 18 de la doublure de passage de roue.

Une fois le positionnement vertical assuré, des vis de fixation dédiées aux points d'ancrages supérieurs 38 sont mises en place et vissées. Le boîtier 30 est alors bien fixé, par ses points supérieurs 38, à la structure de caisse.

Avantageusement, dans un emplacement du véhicule à accès difficile pour faire passer une visseuse et tenir des vis, le point d'ancrage inférieur 40 ne comprend pas de fixation par vissage, au bénéfice du temps de montage et de la réduction des coûts incluant l'économie d'une vis. Le point d'ancrage inférieur 40 par engagement de la plaque 18 dans les fentes aménagées dans les flasques formant fourchette permet d'éviter l'utilisation d'une vis pour une fixation en aveugle sous le projecteur 10 et derrière des pièces de la structure telles que la tôle de traverse avant 12, le panneau de doublure avant 14 et/ou la doublure de passage de roue 16.

Avantageusement, la fixation du projecteur 10 par vissage est effectuée par le haut du projecteur, en accédant directement par l'ouverture de capot avant.

Par ailleurs, le point d'ancrage inférieur 40 n'est pas seulement avantageux en ce qui concerne la facilité de fixation, il est aussi avantageux car il permet également d'assurer un rôle de sécurité passive du véhicule.

En effet, en cas de choc frontal, par exemple lors d'un choc de type choc piéton, le boîtier 30 subit une poussée contre la doublure de passage de roue 16. Pour chaque flasque 44, le fond de la fente 56 à l'extrémité arrière de la rainure d'affaiblissement 58 vient heurter l'extrémité avant plane 18B de la plaque 18 appartenant à ladite doublure de passage de roue. Cette force de poussée entraîne, suivant son intensité, la rupture desdits flasques à leur rainure d'affaiblissement 58, donc la rupture du point d'ancrage inférieur 40.

Avantageusement, le point d'ancrage inférieur 40 est frangible par la possibilité de rupture de ses dents inférieures 44A. La ligne de rupture pour que les flasques 44 puissent se rompre est déterminée par les rainures d'affaiblissement 58.

Avantageusement, le point d'ancrage inférieur 40 peut donc se rompre en cas de choc frontal sur le projecteur 10. Le bas du projecteur 10 peut s'éclipser par rapport à la structure de caisse et par rapport à la carrosserie avoisinante. La rupture du point d'ancrage inférieur 40 par détachement des dents inférieures 44A absorbe de l'énergie mécanique, au bénéfice de la sécurité passive, en particulier lors d'un choc de type choc piéton. Lors d'un petit chocs, cette absorption d'énergie permet aussi le cas échéant d'éviter une rupture de la glace 32 du projecteur.

En cas de réparation suite à un choc frontal de faible intensité, si seulement le point d'ancrage inférieur 40 est dégradé, alors il est possible de fixer à nouveau le projecteur 10 par ce point d'ancrage, en passant une vis qui traverse tant le perçage 52A de la paroi intermédiaire 52 que l'orifice de passage de vis 18A de la plaque rigide 18.

Avantageusement, le point d'ancrage inférieur comporte d'une part une zone de fixation frangible, comportant en particulier la dent 44A et les alentours de la rainure 58, et d'autre part une zone de fixation de réparation pourvue du perçage 52A de la paroi intermédiaire 52 susceptible d'être utilisée après rupture de la zone de fixation frangible, pour fixer le boîtier lors d'une réparation.

En variantes non représentées le point d'ancrage inférieur peut présenter des formes différentes, par exemple un seul flasque à une seule dent pour le maintien vertical du projecteur et aussi à paroi horizontale pour la fixation en réparation.

En variantes non représentées, le boîtier comporte un seul ancrage supérieur ou plus de deux ancrages supérieurs, voire une pluralité d'ancrages inférieurs selon l'invention. La fixation supérieure est effectuée par ancrage à vis comme décrit précédemment ou par ancrage de type à crochet ou autre accrochage équivalent. Quelle que soit sa conformation, la fixation supérieure peut être montée ou démontée plus facilement du fait de l'accessibilité plus favorable en haut du boîtier.

## Revendications

1. Projecteur avant (10) pour véhicule automobile, comportant un boîtier (30) à ancrages supérieur et inférieur pour la fixation du projecteur à une structure de caisse (12, 14, 16, 18) du véhicule, lesdits ancrages comprenant un point d'ancrage inférieur (40) qui est venu de matière avec le boîtier (30) en étant conformé pour s'engager directement dans une partie rigide (18B) correspondante de la structure pour la fixation inférieure du projecteur (10) à ladite structure et qui est frangible pour se rompre en cas de choc frontal sur le projecteur , ledit projecteur étant **caractérisé en ce que** le point d'ancrage inférieur (40) est conformé en fourchette à dent frangible (44A) et à espace inter-dentaire (56) conformé pour recevoir une partie en forme de plaque prévue à la partie rigide (18B) de la structure du véhicule.

2. Projecteur selon la revendication précédente, **caractérisé en ce que** la fourchette est à engagement par coincement de la partie rigide en forme de plaque (18B) de la structure.

3. Projecteur selon l'une quelconque des revendications précédentes, **caractérisé en ce que** le point d'ancrage inférieur (40) est en dessous du boîtier (30).

4. Projecteur selon l'une quelconque des revendications précédentes, **caractérisé en ce que** le point d'ancrage inférieur (40) comporte d'une part une zone de fixation frangible (44A, 58) et d'autre part une zone de fixation de réparation (52) pourvue d'un perçage (52A) de passage de vis susceptible d'être utilisée après rupture de la zone de fixation frangible, pour fixer le boîtier (30) lors d'une réparation.

5. Projecteur selon l'une quelconque des revendications précédentes, **caractérisé en ce que** le point d'ancrage inférieur (40) comporte au moins un flasque (44) qui est venu de matière avec une paroi inférieure (46) du boîtier (30) et qui est frangible en ayant d'une part une fente (56) d'engagement de la partie rigide (18B) de la structure et d'autre part une rainure d'affaiblissement (58) dans le prolongement de cette fente.

6. Projecteur selon la revendication 4 combinée à la revendication 5, **caractérisé en ce que** le point d'ancrage inférieur (40) comporte deux flasques frangibles (44) qui sont reliés entre eux par une paroi intermédiaire (52) située entre la paroi inférieure du boîtier et les fentes (56) des flasques, cette paroi intermédiaire délimitant le perçage (52A) de la zone de fixation de réparation.

7. Projecteur selon l'une quelconque des revendications précédentes, **caractérisé en ce que** les ancrages comprennent deux points d'ancrages supérieurs (38) par vissage.

8. Véhicule automobile comportant une structure de caisse (12, 14, 16, 18) et un projecteur (10) comportant un boîtier (30) à ancrages supérieur et inférieur fixés à la structure de caisse, **caractérisé en ce que** le projecteur (10) est conforme à l'une quelconque des revendications précédentes en ayant son point d'ancrage inférieur (40) qui est engagé dans une partie rigide (18A) de la structure.

9. Véhicule selon la revendication précédente, **caractérisé en ce que** le projecteur (10) est conforme à l'une quelconque des revendications 2 à 7 et **en ce que** la structure de caisse (12, 14, 16, 18) comporte une partie rigide (18A) en forme de plaque qui est engagée directement dans le point d'ancrage inférieur (40) pour un maintien du boîtier (30) sensiblement dans la direction perpendiculaire à celle de ladite plaque, en complément de la fixation supérieure par les ancrages.

## Patentansprüche

1. Vorderer Scheinwerfer (10) für Kraftfahrzeug umfassend ein Gehäuse (30) mit oberer und unterer Verankerung zur Befestigung des Scheinwerfers an eine Karosseriestruktur (12, 14, 16, 18) des Fahrzeugs, die Verankerungen umfassend einen unteren Verankerungspunkt (40), der in das Gehäuse (30) integriert ist und geformt ist, um direkt in einen starren Abschnitt (18B) der Struktur zur unteren Befestigung des Scheinwerfers (10) an der Struktur einzugreifen, und brechbar ist, um bei einem frontalen Aufprall auf den Scheinwerfer zu brechen, wobei der Scheinwerfer **dadurch gekennzeichnet ist, dass** der untere Verankerungspunkt (40) gabelförmig mit brechbarer Verzahnung (44A) und mit Zahnabstand (56) geformt ist, um einen vorhandenen plattenförmigen Abschnitt am starren Abschnitt (18B) der Struktur des Fahrzeugs aufzunehmen.

2. Scheinwerfer nach dem vorherigen Anspruch, **dadurch gekennzeichnet, dass** die Gabel durch Einklemmen des starren plattenförmigen Abschnitts (18B) der Struktur ausgeführt ist.

3. Scheinwerfer nach einem der vorherigen Ansprüche, **dadurch gekennzeichnet, dass** sich der untere Verankerungspunkt (40) unterhalb des Gehäuses (30) befindet.

4. Scheinwerfer nach einem der vorherigen Ansprüche, **dadurch gekennzeichnet, dass** der untere Verankerungspunkt (40) einerseits einen brechbaren Befestigungsbereich (44A, 58) und andererseits einen Reparatur-Befestigungsbereich (52) mit einer Schraubendurchgangsbohrung (52A) aufweist, die nach Bruch des brechbaren Befestigungsbereichs zur Befestigung des Gehäuses (30) bei einer Reparatur verwendet werden kann.

5. Scheinwerfer nach einem der vorherigen Ansprüche, **dadurch gekennzeichnet, dass** der untere Verankerungspunkt (40) mindestens einen Flansch (44) umfasst, der in eine untere Wand (46) des Gehäuses (30) integriert ist, und der brechbar ist, indem er einerseits einen Schlitz (56) zum Einrasten des starren Abschnitts (18B) der Struktur und andererseits eine Einkerbung zur Schwächung (58) in der Verlängerung dieses Schlitzes hat.

6. Scheinwerfer nach Anspruch 4 kombiniert mit dem Anspruch 5, **dadurch gekennzeichnet, dass** der untere Verankerungspunkt (40) zwei brechbare Flansche (44) umfasst, die miteinander durch eine Zwischenwand (52) zwischen der unteren Wand des Gehäuses und den Schlitzen (56) der Flansche umfasst, wobei diese Zwischenwand die Bohrung (52A) des Reparatur-Befestigungsbereichs begrenzt.

7. Scheinwerfer nach einem der vorherigen Ansprüche, **dadurch gekennzeichnet, dass** die Verankerungen zwei obere Verankerungspunkte (38) durch Verschraubung umfassen.

8. Kraftfahrzeug umfassend eine Karosseriestruktur (12, 14, 16, 18) und einen Scheinwerfer (10) umfassend ein Gehäuse (30) mit oberer und unterer Verankerung, die an der Karosseriestruktur befestigt sind, **dadurch gekennzeichnet, dass** der Scheinwerfer (10) einer der vorherigen Ansprüche entspricht und seinen unteren Verankerungspunkt (40) hat, der in einen starren Abschnitt (18A) der Struktur eingerastet ist.

9. Fahrzeug nach dem vorherigen Anspruch, **dadurch gekennzeichnet, dass** der Scheinwerfer (10) einem der Ansprüche 2 bis 7 entspricht und dass die Karosseriestruktur (12, 14, 16, 18) einen starren plattenförmigen Abschnitt (18A) aufweist, der direkt in den unteren Verankerungspunkt (40) eingerastet wird, um das Gehäuse (30) zusätzlich zur oberen Befestigung durch die Verankerungen im Wesentlichen in senkrechter Richtung zu dieser Platte zu halten.

## Claims

1. Front headlight (10) for a motor vehicle, comprising a housing (30) with top and bottom anchorings for fixing the headlight to a bodywork structure (12, 14, 16, 18) of the vehicle, said anchorings comprising a bottom anchoring point (40) that is made in one piece with the housing (30) while being conformed so as to engage directly in a corresponding rigid part (18B) of the structure for the bottom fixing of the headlight (10) to said structure and which is frangible so as to break in the event of frontal impact on the headlight, said headlight being **characterised in that** the bottom anchoring point (40) is shaped as a fork with a frangible tooth (44A) and with an interdental space (56) conformed so as to receive a part in the form of a plate provided at the rigid part (18B) of the structure of the vehicle.

2. Headlight according to the preceding claim, **characterised in that** the fork is engaged by wedging the rigid part in the form of a plate (18B) of the structure.

3. Headlight according to either one of the preceding claims, **characterised in that** the bottom anchoring point (40) is below the housing (30).

4. Headlight according to any one of the preceding claims, **characterised in that** the bottom anchoring point (40) comprises firstly a frangible fixing zone (44A, 58) and secondly a repair fixing zone (52) provided with a piercing (52A) for the passage of a screw able to be used after breakage of the frangible fixing zone, in order to fix the housing (30) during a repair.

5. Headlight according to any one of the preceding claims, **characterised in that** the bottom anchoring point (40) comprises at least one flange (44) that is made in one piece with a bottom wall (46) of the housing (30) and is frangible while having firstly a slot (56) for engaging the rigid part (18B) of the structure and secondly a weakening groove (58) in line with this slot.

6. Headlight according to claim 4 combined with claim 5, **characterised in that** the bottom anchoring point (40) comprises two frangible flanges (44) that are connected together by an intermediate wall (52) situated between the bottom wall of the housing and the slots (56) of the flanges, this intermediate wall delimiting the piercing (52A) of the repair fixing zone.

7. Headlight according to any one of the preceding claims, **characterised in that** the anchorings comprise two top points (38) for anchoring by screwing.

8. Motor vehicle comprising a bodywork structure (12, 14, 16, 18) and a headlight (10) comprising a housing (30) with top and bottom anchorings fixed to the bodywork structure, **characterised in that** the headlight (10) is in accordance with any one of the preceding claims while having its bottom anchoring point (40) engaged in a rigid part (18A) of the structure.

9. Vehicle according to the preceding claim, **characterised in that** the headlight (10) is in accordance with any one of claims 2 to 7 and **in that** the bodywork structure (12, 14, 16, 18) comprises a rigid part (18A) in the form of a plate that is engaged directly in the bottom anchoring point (40) for holding the housing (30) substantially in the direction perpendicular to that of said plate, in addition to the top fixing by the anchorings.
